# EUROPÄISCHE PATENTSCHRIFT

(11) **EP 1 344 599 B1**
(45) Veröffentlichungstag und Bekanntmachung des Hinweises auf die Patenterteilung: **26.05.2004**
(21) Anmeldenummer: 03405078.1
(22) Anmeldetag: 12.02.2003
(51) Int. Cl.: B23Q 1/00, B23Q 11/00, B23B 31/107, B23Q 3/18

(54) **Spanneinrichtung mit einem Spannfutter und einem darin festspannbaren Spannzapfen**
Clamping device with a chuck and a nipple clampable therein
Dispositif de serrage avec mandrin de serrage et tige serrable dans ce mandrin

(30) Priorität: 11.03.2002 CH 4152002
(43) Veröffentlichungstag der Anmeldung: 17.09.2003
(73) Patentinhaber: Erowa AG, CH-5734 Reinach (CH)
(72) Erfinder: Fries, Karl, 5734 Reinach (CH)
(74) Vertreter: Rottmann, Maximilian R.

(56) Entgegenhaltungen:
- DE-A- 4 110 857
- DE-A- 19 841 928
- US-A- 5 415 384
- US-A- 5 961 261

## Beschreibung

Die vorliegende Erfindung bezieht sich auf eine gemäss dem Oberbegriff des Anspruchs 1 ausgebildete Spanneinrichtung, die aus der DE 41 10 857 A bekannt ist.

Derartige Spanneinrichtungen werden bevorzugt zum positionsdefinierten Aufspannen eines Werkstücks bzw. mehrerer Werkstücke im Arbeitsbereich einer Bearbeitungsmaschine eingesetzt. Dazu ist das Spannfutter im Arbeitsbereich der Bearbeitungsmaschine fixiert, während der an einem Werkstückträger befestigte Spannzapfen mittels eines Spannmechanismus im Spannfutter fixierbar ist.

Um unterschiedlich grosse Werkstückträger festspannen zu können, sind sogenannte Palletiersysteme bekannt, die mehrere Spannfutter -üblicherweise 2, 4, 6, oder 8-aufweisen. Im Normalfall wird an diesen Spannfuttern ein Werkstückträger festgespannt, der, je nach Grösse, mit 2, 4, 6, oder 8 Spannzapfen versehen ist. In Einzelfällen kann es vorkommen, dass der Werkstückträger mit einer ungeraden Anzahl von Spannzapfen versehen ist. Da das einzelne Spannfutter im Normalfall weder eine Verdrehsicherung noch Mittel zum Bestimmen der Winkellage um die Z-Achse aufweist, kann es vorteilhaft sein, eines oder mehrere der Spannfutter mit Positionier-Mitteln zu versehen, die nebst der X- und Y- Position auch die Winkellage um die Z-Achse festlegen, so dass ggf. auch Werkstückträger (Paletten) mit einem einzelnen Spannzapfen Lage- und Winkelgerecht am Spannfutter festgespannt werden können. Es versteht sich, dass in diesem Fall die Werkstückträger ebenfalls mit Positionier-Mitteln versehen sein müssen, die mit den vorgängig genannten Positionier-Mitteln am Spannfutter korrespondieren.

Die Positioniergenauigkeit der am Spannfutter zu fixierenden Werkstückträger kann insbesondere durch Verschmutzung der für die Feinpositionierung massgebenden Elemente beeinträchtigt werden. Insbesondere bei konischen Zentrierflächen besteht die Gefahr, dass sich Schmutzpartikel im konisch verengenden Einführabschnitt des Spannfutters oder an der konischen Zentrierfläche des Spannzapfens festsetzen.

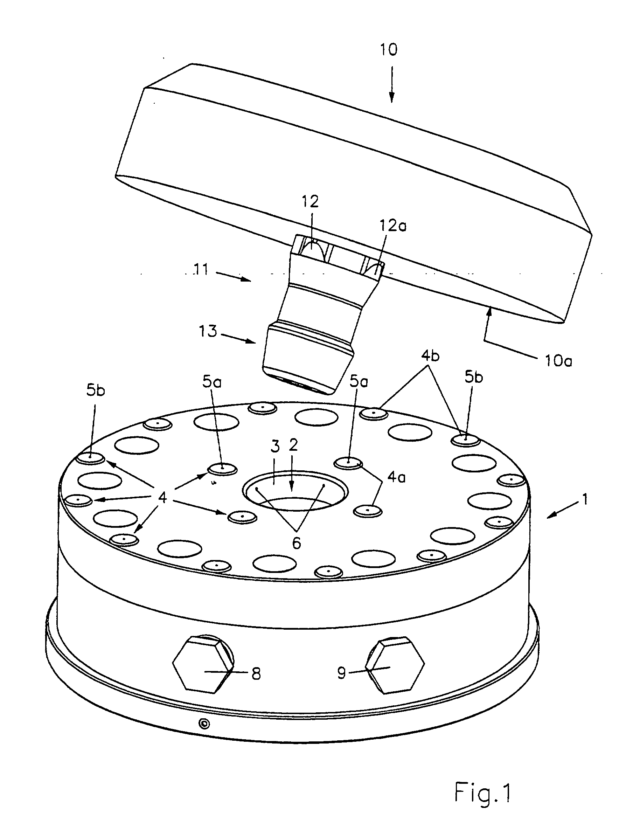

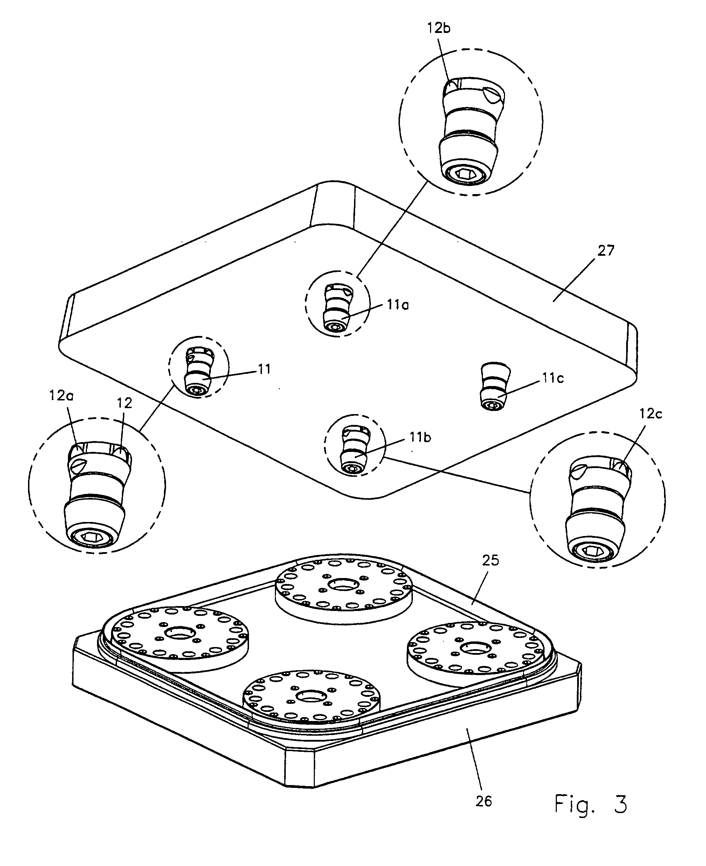

Aus der DE 41 10 857 ist eine Einrichtung zum Kuppeln eines Werkzeughalters mit der Arbeitsspindel einer Werkzeugmaschine bekannt. Die Arbeitsspindel ist zur Aufnahme eines Schaftteils des Werkzeughalters mit einer Aufnahme versehen, die zwischen einem oberen und einem unteren konischen Abschnitt eine ringförmige Ausnehmung mit einer Abstützfläche aufweist. Der Schaftteil des Werkzeughalters ist mit zwei an elastischen Widerlagern abgestützten Konusringen versehen. Zwischen diesen Konusringen ist eine Verriegelungsvorrichtung angeordnet, welche zwei radial verschiebbare Riegelstücke aufweist. Diese Riegelstücke sind auf der Oberseite mit Keilflächen versehen, welche sich beim Verriegeln an der Abstützfläche der ringförmigen Ausnehmung anlegen. Durch das Vorsehen der elastischen Widerlager sind die Konusringe relativ zum Schaftteil in axialer, d.h. in Z-Richtung verschiebbar und ermöglichen ein Hineinziehen des Schaftteils in die Aufnahme, nachdem sich die Konusringe an der Kegelfläche angelegt haben. Die Konusringe selber sind mit Schlitzungen versehen. Der Schaftteil ist mit einem Flanschteil versehen, der auf seiner Unterseite eine ebene, als Z-Anschlag dienende Ringfläche bildet, die beim Festspannen des Schaftteils an der Stirnfläche der Arbeitsspindel zur Anlage kommt. In der Aufnahme der Arbeitsspindel können sowohl herkömmliche Spannzapfen (Fig. 5) wie auch mehrteilige Spannzapfen (Fig. 1 und 3) fixiert werden. Mittel zum Reinigen der konischen Abschnitte bzw. der Konusringe sind keine vorgesehen.

Aus der US 5 961 261 geht ein Spannsystem mit einem Spannzylinder und einem darin einspannbaren Einzugsnippel hervor. Der Spannzylinder ist mit einer zentralen Ausnehmung zur Aufnahme des Einzugsnippels versehen. Der Einzugsnippel weist vier Zentrieransätze auf, die sich beim Einziehen auf der Innenseite der Ausnehmung des Spannzylinders anlegen und den Zentriernippel gegenüber dem Spannzylinder ausrichten. Der Einzugsnippel ist mit vier entlang des Umfangs verteilten Schneidkanten zum Zerteilen von Spänen versehen. Zwischen diesen Schneidkanten verbleibt ein Schmutzfreiraum, der zur Aufnahme des anfallenden Schmutzes vorgesehen ist. Der Spannzylinder ist mit einer Vielzahl von gleichmässig verteilten Gasaustrittsöffnungen versehen, welche in diesen Schmutzfreiraum münden. Durch das Vorsehen dieses Schmutzfreiraums soll der Raum vor den Ausblasöffnungen 14, 15 gezielt freigehalten werden, damit die Ausblasöffnungen nicht verschmutzen können. Es versteht sich, dass der Schmutzfreiraum durch das Vorsehen von Ausblasöffnungen und das Einblasen von Luft nur bedingt von Schmutz frei gehalten werden kann. Im Bereich der Zentrieransätze sind keine Ausblasöffnungen vorgesehen.

Aus der US 5,415,384 ist eine Aufspanneinrichtung zum positionsdefinierten Aufspannen eines Werkstücks am Arbeitsplatz einer Bearbeitungsmaschine bekannt. Die Aufspanneinrichtung weist einen Untersatz und einen daran festspannbaren Werkstückträger auf. Der Untersatz ist mit vier Zentrierlinealen versehen, die in je eine mit einer Nut versehene, in Z-Richtung elastisch nachgiebige Platte eingreifen um den Werkstückträger gegenüber dem Untersatz in X- und Y-Richtung auszurichten. Zum Festspannen des Werkstückträgers am Untersatz sind separate Spannzapfen vorgesehen, welche jedoch keine Zentrierfunktion übernehmen.

Schliesslich ist aus der DE 200 21 047 eine Spanneinrichtung zum Fixieren eines Einzugbolzens an einem Maschinentisch bekannt. Die Spanneinrichtung ist mit einer Grundplatte versehen, in die ein Kolben eingesetzt ist, der von einem an der Grundplatte festgeschraubten Deckel verschlossen ist. Auf der Oberseite des Deckels sind als Z-Anschlag dienende Auflageinseln vorgesehen. Die Grundplatte ist mit Luftkanälen versehen, welche mittig in die Auflageinseln münden und zum Reinigen derselben vorgesehen sind.

Ausgehend von einer Spanneinrichtung wie sie aus der DE 41 10 857 bekannt ist besteht die Aufgabe der Erfindung darin, eine gemäss dem Oberbegriff des Patentanspruchs 1 ausgebildete Spanneinrichtung zu schaffen, bei welcher insbesondere die Verschmutzungsgefahr der konischen Zentrierfläche(n) des Spannzapfens reduziert ist, indem allfällige Schmutzpartikel mittels Druckluft entfernt werden können.

Diese Aufgabe wird durch die Spanneinrichtung gemäβ Anspruch 1 gelöst.

Der Grundgedanke der vorliegenden Erfindung besteht darin, die Feinzentrierung des Spannzapfens nicht über grosse Flächenabschnitte vorzunehmen, sondern am Spannzapfen mehrere exponierte, in der Ausdehnung begrenzte Zentrierflächenabschnitte vorzusehen, mittels welchen der Spannzapfen am sich konisch verengenden Einführabschnitt des Spannfutters in X- und/oder Y-Richtung zentriert wird. Diese Zentrierflächenabschnitte können über korrespondierenden Gasaustrittsöffnungen, welche in den sich konisch verengenden Einführabschnitt des Spannfutters eingelassen sind, gereinigt werden. Da die Zentrierflächenabschnitte exponiert sind und deren Ausdehnung begrenzt ist, sind diese über die korrespondierenden Gasaustrittsöffnungen sehr einfach und effizient zu reinigen.

Bevorzugte Ausführungsformen und Weiterbildungen des Erfindungsgegenstandes sind in den abhängigen Ansprüchen 2 bis 9 umschrieben.

Im Anspruch 10 wird zudem eine Anordnung beansprucht, die mit zumindest zwei nach einem der vorhergehenden Ansprüche ausgebildeten Spanneinrichtungen versehen ist.

Im folgenden wird ein Ausführungsbeispiel der erfindungsgemässen Einrichtung unter Bezugnahme auf die beiliegenden Zeichnungen näher erläutert. In den Zeichnungen zeigen:
- Fig. 1: eine perspektivische Ansicht eines Spannfutters sowie eines Werkstückträgers;
- Fig. 2: einen Längsschnitt durch ein Spannfutter sowie eine Seitenansicht des Werkstückträgers;
- Fig. 3: eine perspektivische Ansicht auf einen mit vier Spannfuttern versehenen Maschinentisch sowie einen mit vier Spannzapfen versehenen Werkstückträger;

Aus der Fig. 1 geht eine schematisch dargestellte Spanneinrichtung in perspektivischer Ansicht hervor. Diese besteht aus einem generell mit 1 bezeichneten Spannfutter sowie einem generell mit 10 bezeichneten Werkstückträger, der mit einem Spannzapfen 11 zum Festspannen am Spannfutter 1 versehen ist. Im vorliegenden Beispiel stellt der Werkstückträger 10 gleichzeitig auch das Werkstück dar.

Das an der Bearbeitungsmaschine mit nicht näher dargestellten Mitteln zu fixierende Spannfutter 1 ist mit einer zentralen Öffnung 2 zur Aufnahme und Fixierung des Spannzapfens 11 versehen. Der obere Abschnitt dieser Öffnung 2 ist als konischer Einführabschnitt 3 ausgebildet. Auf der Oberseite weist das Spannfutter 1 eine Vielzahl von Auflageflächen 4 für den Werkstückträger 10 auf. Die Auflageflächen 4 bilden zusammen den Z-Anschlag für den Werkstückträger 10. Die kreisförmig gestalteten Auflageflächen 4 sind in einer inneren Gruppe und einer äusseren Gruppe angeordnet. Die innere Gruppe besteht aus vier koaxial um die Symmetrieachse des Spannfutters herum angeordneten Auflageflächen 4a, während die äussere Gruppe aus zwölf koaxial um die Symmetrieachse des Spannfutters herum angeordneten Auflageflächen 4b besteht. Im Zentrum jeder Auflagefläche 4a, 4b ist eine Öffnung 5a, 5b zum Ausblasen von Luft angeordnet. Das Spannfutter 1 ist im Bereich des konischen Einführabschnitts 3 mit vier Öffnungen 6 zum Ausblasen von Luft versehen, wobei aus dieser Darstellung nur die beiden hinteren Öffnungen 6 ersichtlich sind. Das Spannfutter 1 weist ferner einen Spannmechanismus (aus dieser Darstellung nicht ersichtlich) zum Einziehen und Fixieren des Spannzapfens 11 auf. Auf der Aussenseite des Spannfutters 1 sind zwei Anschlüsse 8, 9 vorgesehen, über welche die über die Öffnungen 5a, 5b, 6 auszublasende Luft sowie ein Medium zum Betätigen des Spannmechanismus zugeführt werden kann.

Der am Werkstückträger 10 angeordnete Spannzapfen 11 ist auf der Hinterseite mit vier exponierten Zentrierflächenabschnitten 12, 12a versehen, welche den Spannzapfen 11 beim Einführen in das Spannfutter 1 am sich konisch verengenden Einführabschnitt 3 in X-und Y-Richtung zentrieren. Unter exponierten Zentrierflächenabschnitten sind im vorliegenden Fall Zentrierflächenabschnitte 12, 12a zu verstehen, die in der Ausdehnung begrenzt sind und sich von der sie umgebenden Fläche abheben. Die Zentrierflächenabschnitte 12, 12a entsprechen flächenmässig nur einem Bruchteil des sich konisch verengenden Einführabschnitts 3 des Spannfutters 1, was zu einer hohen Flächenbelastung der Zentrierflächenabschnitte 12, 12a beim Festspannen des Spannzapfens führt und u.a. deren Schmutzempfindlichkeit herabsetzt.

Von den vier jeweils um 90° versetzten Zentrierflächenabschnitten sind nur deren zwei ersichtlich, wobei der dem Betrachter zugewandte vordere Zentrierflächenabschnitt mit 12 und der seitliche Zentrierflächenabschnitt mit 12a bezeichnet ist. Die Lage der Ausblasöffnungen 6 im Einführbereich des Spannfutters korrespondiert derart mit der Lage der Zentrierflächenabschnitte 12, 12a des Spannzapfens 11, dass die Zentrierflächenabschnitte 12, 12a beim Festspannen des Werkstückträgers unmittelbar vor den Ausblasöffnungen 6 des Spannfutters zu liegen kommen, so dass bei aus den Ausblasöffnungen 6 austretender Luft die Zentrierflächenabschnitte 12, 12a pneumatisch gereinigt werden. Es versteht sich, dass im vorliegenden Fall, bei nur einem Spannfutter und einem Werkstückträger 10 Mittel zum Festlegen der Winkellage um die Z-Achse vorgesehen sein müssen, damit die Zentrierflächenabschnitte 12, 12a beim Festspannen des Werkstückträgers 10 vor den Ausblasöffnungen 6 zu liegen kommen. Da derartige Mittel grundsätzlich bekannt sind, wurde auf deren Darstellung verzichtet.

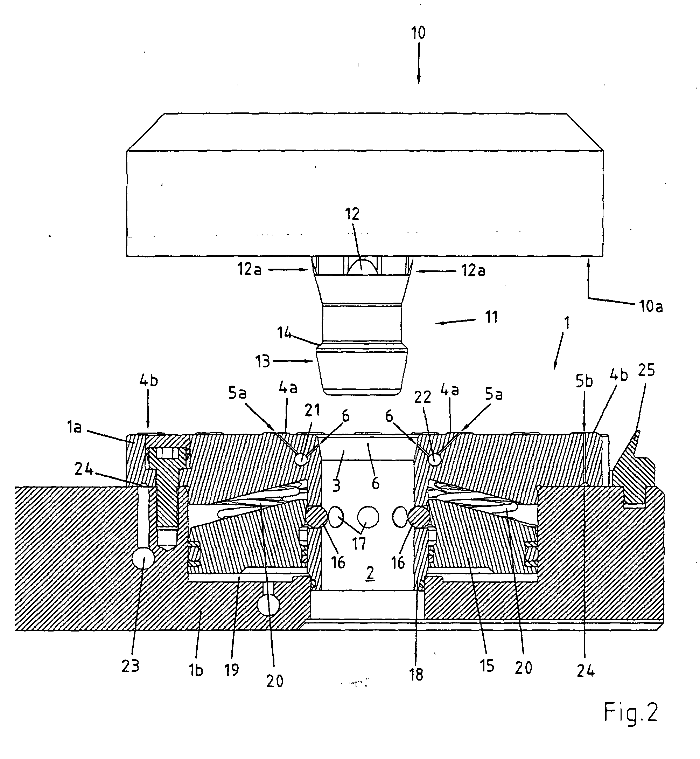

In der Fig. 2 ist das Spannfutter 1 in einem Längsschnitt und der Werkstückträger 10 in einer Seitenansicht dargestellt. Das Spannfutter 1 besteht aus einem Oberteil 1a und einem Unterteil 1b, wobei der Unterteil in diesem Fall einen Teil eines Maschinentischs darstellt. Der Spannmechanismus zum Festspannen des Spannzapfens umfasst einen mittels Federn 20 belasteten Kolben 15 und eine Mehrzahl von Spannkugeln 16. Diese Spannkugeln 16 sind in radialen Bohrungen 17, die in einen die zentrale Öffnung begrenzenden Fortsatz 18 eingelassen sind, aufgenommen. Um den Kolben 15 entgegen der Federkraft in die obere Endstellung verschieben zu können, ist zwischen dem Unterteil des Spannfutters 1a und dem Kolben 15 ein Druckraum 19 vorgesehen, der pneumatisch oder hydraulisch unter Druck gesetzt werden kann.

Der am Werkstückträger 10 befestigte Spannzapfen 11 ist an seinem vorderen Ende mit einem kegelstumpfförmig ausgebildeten Abschnitt 13 versehen, der an seinem hinteren Ende eine umlaufende Schulter 14 bildet, an welcher sich die Spannkugeln 16 zum Einziehen und Fixieren des Spannzapfens 11 anlegen können. Der vordere Abschnitt 13 des Spannzapfens 11 wirkt als Grobzentrierung, während die exponierten Zentrierflächenabschnitte 12, 12a als Feinzentrierung wirken, mittels welchen der Spannzapfen 11 beim Einführen in das Spannfutter 1 am sich konisch verengenden Einführabschnitt 3 in X- und Y-Richtung zentriert wird. Um den Spannzapfen 11 in die Öffnung 2 des Spannfutters 1 einführen zu können, muss der Kolben 15 entgegen der Federkraft in die obere Endstellung bewegt werden, damit sich die Spannkugeln 16 in eine in den Kolben 15 eingelassene Nut zurückziehen können.

Nach dem Einführen des Spannzapfens 11 in die Öffnung 2 des Spannfutters 1 liegt der Werkstückträger 10 lose auf dem Spannfutter 1 auf. Zum Festspannen des Werkstückträgers 10 wird der Druck im Druckraum 19 reduziert, worauf der Kolben 15 durch die Federkraft nach unten gedrückt wird. Dabei werden die Spannkugeln 16 vom Kolben 15 in bekannter Weise radial nach innen verschoben, wo sie sich an der Schulter 14 des Spannzapfens 11 anlegen und letzteren nach unten ziehen. Durch die hohe axiale Einzugskraft von bis zu 20 KN wird sowohl der Spannzapfen 11 etwas in die Länge gezogen, wodurch sich dessen Aussen-Durchmesser verringert, wie auch der sich konisch verengende Einführbereich 3 der Öffnung 2 etwas aufgeweitet. Dadurch wird der Spannzapfen 11 etwas tiefer in die zentrale Öffnung 2 hineingezogen und die plane Unterseite 10a des Werkstückträgers 40 kommt auf den als Z-Anschlag wirkenden Flächen 4a, 4b des Spannfutters 1 aufzuliegen. Damit ist der Werkstückträger 10 auch in Z-Richtung gegenüber dem Spannfutter 1 positioniert.

Die Dimensionierung des Spannzapfens 11 ist so gewählt, dass nach dem Feinzentrieren und vor dem Festspannen des Spannzapfens 11, d.h. wenn der Werkstückträger 10 nur mit seinem Eigengewicht auf dem Spannfutter 1 aufliegt, zwischen den kreisförmigen, als Z-Anschlag wirkenden Flächen 4a, 4b des Spannfutters 1 und der planen Unterseite 10a des Werkstückträgers 10 ein Spalt in der Grössenordnung von 0.01 bis 0.02 mm besteht. Die wirkungswesentlichen Elemente der Spanneinrichtung sind bezüglich Dimensionen und Formgebung derart aufeinander abgestimmt, dass das Aufheben des Spalts zwischen der planen Unterseite 10a des Werkstückträgers 10 und den als Z-Anschlag wirkenden Flächen 4a, 4b des Spannfutters 1, nach der Feinzentrierung des Spannzapfens 11 in X-und Y-Richtung, praktisch ausschliesslich aufgrund der Materialelastizität des Spannzapfens 11 sowie des Spannfutters 1 im Bereich der zentralen Öffnung 2 erfolgt. Dadurch kann gänzlich auf Zentrierelemente verzichtet werden, die in Z-Richtung federelastisch nachgiebig sind.

In das Spannfutteroberteil 1a sind Kanäle 21, 22 eingelassen, über welche die in die Auflageflächen 4a eingelassenen Ausbtasöffnungen 5a sowie die im Bereich des konischen Einführabschnitts 3 vorgesehenen Öffnungen 6 mit Druckluft beaufschlagbar sind. Um die in die äusseren Auflageflächen 4b eingelassenen Bohrungen 5b mit Druckluft beaufschlagen zu können, ist in die Unterseite des Spannfutteroberteils 1a ein Ringkanal 24 eingelassen. Dieser Ringkanal 24 wird von einer Bohrung 23 gespeist. Die Bohrung 23 und die Kanäle 21, 22 sind über nicht näher dargestellte Leitungen bzw. Kanäle miteinander verbunden.

Während des Festspannens des Werkstückträgers 10 wird über sämtliche Ausblasöffnungen 5a, 5b, 6 Luft ausgeblasen. Diese Luft reinigt sowohl die an den Z-Auflageflächen zur Anlage kommenden Flächenabschnitte auf der Unterseite 10a des Werkstückträgers 10 wie auch die Zentrierflächenabschnitte 12, 12a des Spannzapfens 11. Durch den sich beim Festspannen kontinuierlich verkleinernden Spalt zwischen den Ausblasöffnungen 5a, 5b und der Unterseite 10a des Werkstückträgers 10 bzw. den Zentrierflächenabschnitten 12, 12a des Spannzapfens 11 werden sowohl die Z-Auflageflächen 4a, 4b wie auch die an die Ausblasöffnungen 6 angrenzenden Bereiche des konischen Einführabschnitts 3 pneumatisch gereinigt. Indem sowohl die Z-Auflageflächen 4a, 4b wie auch die Zentrierflächenabschnitte 12, 12a des Spannzapfens 11 eine begrenzte Ausdehnung besitzen, ist eine gute Reinigung der jeweiligen Auf- bzw. Anlageflächen gewährleistet. Seitlich des Spannfutters 1 ist eine Dichtung 25 angeordnet, welche etwas über die Oberseite des Spannfutters 1 vorsteht. Die Wirkungsweise dieser Dichtung wird nachfolgend anhand der Figur 3 erläutert.

Fig. 3 zeigt eine perspektivische Ansicht auf einen mit vier Spannfuttern versehenen Maschinentisch 26 sowie einen mit vier Spannzapfen 11, 11a, 11b, 11c versehenen Werkstückträger 27. Von diesen vier Spannzapfen 11, 11a, 11 b, 11c ist der linke Spannzapfen 11, der vordere Spannzapfen 11a sowie der hintere Spannzapfen 11b jeweils auch in einer vergrösserten Darstellung ausserhalb des Werkstückträgers 27 ersichtlich. Dabei definiert der linke Spannzapfen 11 den Nullpunkt, indem dieser mit vier Zentrierflächenabschnitten zum Positionieren in X- und Y-Richtung versehen ist. Von diesen vier Zentrierflächenabschnitten sind jedoch nur ein vorderer 12 und ein seitlicher 12a Zentrierflächenabschnitt ersichtlich. Der vordere Spannzapfen 11a ist mit zwei Zentrierflächenabschnitten 12b versehen und dient dem Positionieren des Werkstückträgers 27 in der einen Richtung (X-Richtung). Der hintere Spannzapfen 11b ist ebenfalls mit zwei Zentrierflächenabschnitten 12c versehen, welche dem Positionieren des Werkstückträgers 27 in der anderen Richtung (Y-Richtung) dienen. Der rechte Spannzapfen 11c weist keine Zentrierflächenabschnitte auf und dient lediglich dem Festspannen des Werkstückträgers 27 in Z-Richtung. Im weiteren ist die aussen umlaufende Dichtung 25 ersichtlich, welche sich beim Aufsetzen des Werkstückträgers 27 dichtend an dessen Unterseite anlegt und den Maschinentisch 26 mitsamt den vier Spannfuttern vor Verschmutzung schützt.

Anstelle eines Spannzapfens mit vier exponierten Zentrierflächenabschnitten kann beispielsweise auch ein Spannzapfen mit drei exponierten, um jeweils 120° zueinander versetzten Zentrierflächenabschnitten zum Festlegen des Nullpunkts vorgesehen werden.

Ebenso kann ein Spannzapfen mit mehr als vier Zentrierflächenabschnitten zum Festlegen des Nullpunkts vorgesehen werden. Der Vorteil der hier gezeigten Variante besteht allerdings darin, dass mit vier Ausblasöffnungen im konischen Einführabschnitt des Spannfutters sowohl Spannzapfen mit zwei wie auch mit vier Zentrierflächenabschnitten gereinigt werden können.

## Patentansprüche

1. Spanneinrichtung mit einem Spannfutter (1) und einem darin festspannbaren Spannzapfen (11), wobei das Spannfutter (1) mit einer zentralen Öffnung (2) zur Aufnahme des Spannzapfens (11) und einem Spannmechanismus zum Festspannen des Spannzapfens (11) versehen ist, und wobei die zentrale Öffnung (2) des Spannfutters (1) einen sich konisch verengenden Einführabschnitt (3) aufweist, **dadurch gekennzeichnet, dass** der Spannzapfen (11) mit mehreren exponierten Zentrierflächenabschnitten (12, 12a) zum Ausrichten des Spannzapfens (11) am sich konisch verengenden Einführabschnitt (3) des Spannfutters (1) in X- und/oder Y-Richtung versehen ist, und dass das Spannfutter (1) im Einführabschnitt (3) mit zu den exponierten Zentrierflächenabschnitten (12, 12a) des Spannzapfens (11) korrespondierenden Gasaustrittsöffnungen (6) zum Reinigen der exponierten Zentrierflächenabschnitte (12, 12a) des Spannzapfens (11) versehen ist.

2. Spanneinrichtung nach Anspruch 1, **dadurch gekennzeichnet, dass** der Spannzapfen (11) mit zwei exponierten, einander diametral gegenüberliegenden Zentrierflächenabschnitten (12a) zum Ausrichten in X- oder Y-Richtung versehen ist.

3. Spanneinrichtung nach Anspruch 1, **dadurch gekennzeichnet, dass** der Spannzapfen (11) mit drei exponierten, um jeweils 120° zueinander versetzten Zentrierflächenabschnitten zum Ausrichten in X- und Y-Richtung versehen ist.

4. Spanneinrichtung nach Anspruch 1, **dadurch gekennzeichnet, dass** der Spannzapfen (11) mit vier exponierten, um jeweils 90° zueinander versetzen Zentrierflächenabschnitten (12, 12a) zum Ausrichten in X- und Y-Richtung versehen ist.

5. Spanneinrichtung nach einem der Ansprüche 2 bis 4, **dadurch gekennzeichnet, dass** die Zentrierflächenabschnitte (12, 12a) kegelstumpfabschnittförmig ausgebildet sind.

6. Spanneinrichtung nach einem der vorhergehenden Ansprüche, **dadurch gekennzeichnet, dass** der Spannzapfen (11) mit einem vorderen als Grobzentrierung ausgebildeten Abschnitt (14) versehen ist, und dass die exponierten Zentrierflächenabschnitte (12, 12a) auf der Hinterseite des Spannzapfens (11) angeordnet und als Feinzentrierung ausgebildet sind.

7. Spanneinrichtung nach einem der vorhergehenden Ansprüche, **dadurch gekennzeichnet, dass** das Spannfutter (1) mit mehreren als Z-Anschlag wirkenden Auflageflächen (4) versehen ist, welch letztere mit Gasaustrittsöffnungen (5a, 5b) zum Reinigen der an den Auflageflächen (4) zur Anlage kommenden Auflagefläche(n) (10a) eines Werkstückträgers (10) versehen ist.

8. Spanneinrichtung nach Anspruch 6, **dadurch gekennzeichnet, dass** die als Z-Anschlag ausgebildeten Auflageflächen (4) rund sind.

9. Spanneinrichtung nach Anspruch 1, **dadurch gekennzeichnet, dass** der Spannzapfen (11) derart dimensioniert ist, dass er nach der Feinpositionierung unter Ausnutzung der Materialelastizität des Spannzapfens (11) und/oder des Spannfutters (1) im Bereich der zentralen Öffnung (2) durch den Spannmechanismus weiter in die Öffnung (2) hineinziehbar ist, so dass eine Verschiebung des Spannzapfens (11) in Z-Richtung stattfindet.

10. Anordnung mit zumindest zwei Spanneinrichtungen nach einem der vorhergehenden Ansprüche, bei der ein mit einer Mehrzahl von den Spannfuttern versehener Maschinentisch (26) und ein mit einer Mehrzahl von den Spannzapfen (11, 11a, 11b, 11c) versehener Werkstückträger (27) vorgesehen sind, wobei einer der Spannzapfen (11) zum Festlegen der Lage des Werkstückträgers (27) in X- und Y-Richtung und zumindest ein weiterer Spannzapfen (11a, 11b) zur Festlegung der Winkellage des Werkstückträgers (27) um die -Z-Achse des Nullpunkts vorgesehen ist.

11. Anordnung nach Anspruch 10, **dadurch gekennzeichnet, dass** der zumindest eine weitere Spannzapfen (11a, 11b) nur zum Ausrichten in X- oder in Y-Richtung vorgesehen ist, indem der hintere Abschnitt des Spannzapfens (11a, 11b) mit zwei einander diametral gegenüberliegenden Flächenbereichen (12a, 12b) versehen ist.

## Claims

1. Chucking device with a chuck (1) and a chucking spigot (11) which can be chucked therein, the chuck (1) being provided with a central opening (2) for accommodating the chucking spigot (11) and a chucking mechanism for chucking the chucking spigot (11), the central opening (2) of the chuck (1) having a conically narrowing insertion section (3), **characterized in that** the chucking spigot (11) is provided with a plurality of exposed centring surface sections (12, 12a) for orienting the chucking spigot (11) at the conically narrowing insertion section (3) of the chuck (1) in the X and/or Y direction, and **in that** the chuck (1), in the insertion section (3), is provided with gas-outlet openings (6) corresponding to the exposed centring surface sections (12, 12a) of the chucking spigot (11) and intended for cleaning the exposed centring surface sections (12, 12a) of the chucking spigot (11).

2. Chucking device according to Claim 1, **characterized in that** the chucking spigot (11) is provided with two exposed, diametrically opposite centring surface sections (12a) for orienting in the X or Y direction.

3. Chucking device according to Claim 1, **characterized in that** the chucking spigot (11) is provided with three exposed centring surface sections, offset from one another in each case by 120°, for orienting in the X and Y directions.

4. Chucking device according to Claim 1, **characterized in that** the chucking spigot (11) is provided with four exposed centring surface sections (12, 12a), offset from one another in each case by 90°, for orienting in the X and Y directions.

5. Chucking device according to one of Claims 2 to 4, **characterized in that** the centring surface sections (12, 12a) are of frustoconical design.

6. Chucking device according to one of the preceding claims, **characterized in that** the chucking spigot (11) is provided with a front section |(13) designed as a coarse centring means, and **in that** the exposed centring surface sections (12, 12a) are arranged on the rear side of the chucking spigot (11) and are designed as fine centring means.

7. Chucking device according to one of the preceding claims, **characterized in that** the chuck (1) is provided with a plurality of bearing surfaces (4) which act as a Z stop and are provided with gas-outlet openings (5a, 5b) for cleaning the bearing surface(s) (10a) of a work carrier (10), the said bearing surface(s) (10a) coming to bear on the bearing surfaces (4).

8. Chucking device according to Claim 6, **characterized in that** the bearing surfaces (4) designed as a Z stop are round.

9. Chucking device according to Claim 1, **characterized in that** the chucking spigot (11) is dimensioned in such a way that, after the fine positioning, while utilizing the material elasticity of the chucking spigot (11) and/or of the chuck (1) in the region of the central opening (2), it can be drawn by the chucking mechanism further into the opening (2), so that a displacement of the chucking spigot (11) in the Z direction takes place.

10. Arrangement having at least two chucking devices according to one of the preceding claims, in which a machine table (26) provided with a plurality of the chucks and a work carrier (27) provided with a plurality of the chucking spigots (11, 11a, 11b, 11c) are provided, one of the chucking spigots (11) being provided for fixing the position of the work carrier (27) in the X and Y directions, and at least one further chucking spigot (11a, 11b) being provided for fixing the angular position of the work carrier (27) about the Z axis of the zero point.

11. Arrangement according to Claim 10, **characterized in that** the at least one further chucking spigot (11a, 11b) is provided only for orienting in the X or Y direction by virtue of the fact that the rear section of the chucking spigot (11a, 11b) is provided with two diametrically opposite surface regions (12a, 12b).

## Revendications

1. Dispositif de serrage avec un mandrin de serrage (1) et un tenon de serrage (11) blocable dans celui-ci, moyennant quoi le mandrin de serrage (1) est pourvu d'une ouverture centrale (2) pour le logement du tenon de serrage (11) et d'un mécanisme de serrage pour le blocage du tenon de serrage (11), et moyennant quoi l'ouverture centrale (2) du mandrin de serrage (1) comporte un tronçon d'introduction (3) s'amincissant en forme de cône, **caractérisé en ce que** le tenon de serrage (11) est pourvu de plusieurs tronçons de surface de centrage (12, 12a) exposés pour aligner le tenon de serrage (11) sur le tronçon d'introduction (3) s'amincissant en forme de cône du mandrin de serrage (1) dans la direction X et/ou Y, et **en ce que** le mandrin de serrage (1) est pourvu, dans le tronçon d'introduction (3), d'ouvertures de sortie de gaz (6) correspondant aux tronçons de surface de centrage (12, 12a) exposés du tenon de serrage (11) pour le nettoyage des tronçons de surface de centrage (12, 12a) exposés du tenon de serrage (11).

2. Dispositif de serrage selon la revendication 1, **caractérisé en ce que** le tenon de serrage (11) est pourvu de deux tronçons de surface de centrage (12a) exposés, diamétralement opposés l'un à l'autre, pour l'alignement dans la direction X ou Y.

3. Dispositif de serrage selon la revendication 1, **caractérisé en ce que** le tenon de serrage (11) est pourvu de trois tronçons de surface de centrage exposés, décalés chacun de 120° l'un par rapport à l'autre, pour l'alignement dans la direction X et Y.

4. Dispositif de serrage selon la revendication 1, **caractérisé en ce que** le tenon de serrage (11) est pourvu de quatre tronçons de surface de centrage (12, 12a) exposés, décalés chacun de 90° l'un par rapport à l'autre, pour l'alignement dans la direction X et Y.

5. Dispositif de serrage selon l'une quelconque des revendications 2 à 4, **caractérisé en ce que** les tronçons de surface de centrage (12, 12a) sont configurés en forme de tronçons tronconiques.

6. Dispositif de serrage selon l'une quelconque des revendications précédentes, **caractérisé en ce que** le tenon de serrage (11) est pourvu d'un tronçon avant (14) conçu comme un centrage grossier, et **en ce que** les tronçons de surface de centrage (12, 12a) exposés sont placés sur le côté arrière du tenon de serrage et sont conçus comme un centrage fin.

7. Dispositif de serrage selon l'une quelconque des revendications précédentes, **caractérisé en ce que** le mandrin de serrage (1) est pourvu de plusieurs surfaces d'appui (4) fonctionnant comme butée en Z, la dernière étant pourvue d'ouvertures de sortie de gaz (5a, 5b) pour le nettoyage de la (des) surface(s) (10a) s'appuyant sur les surfaces d'appui (4) d'un porte-outil (10).

8. Dispositif de serrage selon la revendication 6,
**caractérisé en ce que** les surfaces d'appui (4) configurées comme butée en Z sont rondes.

9. Dispositif de serrage selon la revendication 1, **caractérisé en ce que** le tenon de serrage (11) est dimensionné de telle manière qu'après le positionnement fin à l'aide de l'élasticité du matériau du tenon de serrage (11) et/ou du mandrin de serrage (1), il peut être inséré plus loin dans l'ouverture (2), dans la zone de l'ouverture centrale (2) à l'aide du mécanisme de serrage, de sorte qu'un décalage du tenon de serrage (11) se produit dans la direction Z.

10. Arrangement avec au moins deux dispositifs de serrage selon l'une quelconque des revendications précédentes, dans lequel sont prévus une table de machine-outil (26) pourvue d'une pluralité des mandrins de serrage et un porte-outil (27) pourvu d'une pluralité des tenons de serrage (11, 11a, 11b, 11c), moyennant quoi l'un des tenons de serrage (11) est prévu pour la détermination de la position du porte-outil (27) dans la direction X et Y et au moins un autre tenon de serrage (11a, 11b) est prévu pour la détermination de la position angulaire du porte-outil (27) autour de l'axe Z du point zéro.

11. Arrangement selon la revendication 10, **caractérisé en ce que** le au moins un autre tenon de serrage (11a, 11b) est prévu uniquement pour l'alignement dans la direction X ou Y, le tronçon arrière du tenon de serrage (11a, 11b) étant pourvu de deux tronçons de surface de centrage (12a, 12b) diamétralement opposés l'un à l'autre.
